# EUROPÄISCHE PATENTANMELDUNG

(11) **EP 3 594 033 A1**
(43) Veröffentlichungstag der Anmeldung: **15.01.2020**
(21) Anmeldenummer: 19186109.5
(22) Anmeldetag: 12.07.2019
(51) Int. Cl.: B60H 1/00

(54) **SYSTEM UND VERFAHREN ZUM ERWÄRMEN UND/ODER ABKÜHLEN EINER OBERFLÄCHE**

(30) Priorität: 13.07.2018 DE 202018104055 U
(71) Anmelder: Wieczorek, Peter, 97631 Bad Königshofen (DE)
(72) Erfinder: Wieczorek, Peter, 97631 Bad Königshofen (DE)
(74) Vertreter: 2s-ip Schramm Schneider Bertagnoll Patent- und Rechtsanwälte Part mbB

(57) **Zusammenfassung**

Bereitgestellt werden ein System und ein Verfahren zum Temperieren zumindest einer Oberfläche (O) innerhalb einer Fahrgastzelle eines Fahrzeuges, insbesondere eines Personenkraftwagens, eines Zuges, eines Busses oder eines Flugzeuges, wobei
- unterhalb der zu temperierenden Oberfläche (O) Kanäle (K) angeordnet sind, durch die ein Wärmeträgermedium (M) hindurchleitbar ist,
- die Kanäle Bestandteil eines Heiz-/Kühlkreislaufes sind, und
- die Kanäle mit einer Heiz-/Kühleinrichtung gekoppelt sind, wobei die Heiz-/Kühleinrichtung angepasst ist, das Wärmeträgermedium zu erwärmen und/oder zu kühlen.

## Beschreibung

### Gebiet der Erfindung

Die Erfindung betrifft ein System und ein Verfahren zum Temperieren zumindest einer Oberfläche innerhalb einer Fahrgastzelle eines Fahrzeugs, etwa eines Personenkraftwagens. Die Erfindung betrifft außerdem ein Fahrzeug, etwa einen Personenkraftwagen, mit einem erfindungsgemäßen System zum Temperieren zumindest einer Oberfläche innerhalb der Fahrgastzelle des Fahrzeugs.

### Hintergrund der Erfindung

Das Einstellen der Temperatur innerhalb eines Fahrzeugs erfolgt üblicherweise über ein Erwärmen oder Abkühlen der in den Fahrzeuginnenraum einzuleitenden oder der innerhalb des Fahrzeuginnenraums zirkulierenden Luft. Die temperierte Luft wird dabei durch fahrzeugeigene Lüftungssysteme in unterschiedliche Bereiche des Fahrzeuginnenraums transportiert.

Die zur Temperierung der Luft notwendigen Heiz- bzw. Klimaanlagen gehören mittlerweile häufig bereits zur Serienausstattung moderner Fahrzeuge.

Das Kühlen des Fahrzeuginnenraums erfolgt hierbei ausschließlich über die Kühlung der einströmenden Luft, was zu unangenehmen Zugerscheinungen bei den Insassen führen kann.

Bei hohen Außentemperaturen können sich Oberflächen der Fahrgastzelle bzw. des Fahrgastraums teilweise erheblich aufheizen, insbesondere bei direkter Sonneneinstrahlung. Um den Fahrgastraum zügig abzukühlen, muss ein sehr hoher Durchsatz gekühlter Luft durch den Fahrgastraum erreicht werden, um nicht nur die Innenluft abzukühlen, sondern auch die Oberflächen des Fahrgastraums.

Entsprechendes gilt auch bei sehr niedrigen Außentemperaturen. Das heißt, um den Fahrgastraum zügig zu erwärmen, muss ein sehr hoher Durchsatz erwärmter Luft durch den Fahrgastraum realisiert werden.

Das Erwärmen bzw. das Abkühlen des Fahrzeuginnenraums mittels in den Fahrzeuginnenraum zugeführter Luft ermöglicht zwar eine verhältnismäßig schnelle Temperaturänderung im Innenraum des Fahrzeugs. Nachteilig wirken sich jedoch die bereits erwähnte Zuglufterscheinung sowie die Geräuschentwicklungen aus. Insbesondere beim Abkühlen des Fahrzeuginnenraums mittels in den Fahrzeuginnenraum eingeleiteter Luft geht ein erheblicher Teil der Energie, die für das Abkühlen der Luft aufgewandt wird, verloren, da ein großer Teil der gekühlten Luft aus dem Innenraum austritt ohne ausreichend Wärmeenergie von den Fahrzeugbauteilen im Fahrzeuginnenraum aufgenommen zu haben.

Insbesondere bei Elektrofahrzeugen ist es wünschenswert, derartige Energieverluste zu reduzieren oder gar zu vermeiden, um die Reichweite des Fahrzeugs wegen eines Erwärmens oder eines Abkühlens des Fahrzeuginnenraums nicht unnötigerweise zu reduzieren.

### Aufgabe der Erfindung

Aufgabe der vorliegenden Erfindung ist es daher, Lösungen bereitzustellen, die die Temperierung und den Wärmekomfort innerhalb einer Fahrgastzelle eines Fahrzeugs verbessern, ohne dabei einen unnötigen Energieverbrauch zu verursachen.

### Erfindungsgemäße Lösung

Erfindungsgemäß wird diese Aufgabe durch ein System und ein Verfahren zum Temperieren zumindest einer Oberfläche innerhalb einer Fahrgastzelle eines Fahrzeugs und durch ein Fahrzeug mit einem erfindungsgemäßen System nach den unabhängigen Ansprüchen gelöst. Vorteilhafte Ausgestaltungen der Erfindung sind in den jeweiligen abhängigen Ansprüchen angegeben.

Bereitgestellt wird demnach ein System zum Temperieren zumindest einer Oberfläche innerhalb einer Fahrgastzelle eines Fahrzeugs, wobei
- unterhalb der zu temperierenden Oberfläche Kanäle angeordnet sind, durch die ein Wärmeträgermedium hindurchleitbar ist,
- die Kanäle Bestandteil eines Heiz-/Kühlkreislaufs sind, und
- die Kanäle mit einer Heiz-/Kühleinrichtung gekoppelt sind, wobei die Heiz-/Kühleinrichtung so angepasst ist, das Wärmeträgermedium zu erwärmen und/oder zu kühlen.

Dadurch können Oberflächen im Fahrgastraum bzw. in der Fahrgastzelle eines Fahrzeugs erwärmt bzw. gekühlt werden, was zu einem verbesserten Wärmekomfort innerhalb des Fahrzeuginnenraums führt. Zudem kann der Luftdurchsatz im Fahrzeuginnenraum sowohl beim Erwärmen als auch beim Abkühlen deutlich reduziert werden, da die einströmende Luft weitestgehend nur noch für eine temperierte Frischluftversorgung benötigt wird. Die Oberflächen des Fahrzeuginnenraums werden hingegen weitestgehend mit dem erfindungsgemäßen System erwärmt bzw. gekühlt. Insbesondere ein Abkühlen des Fahrzeuginnenraums kann so deutlich energieschonender durchgeführt werden. Ferner werden unangenehme Zugerscheinungen weitestgehend vermieden, da die Strömungsgeschwindigkeit der in den Fahrzeugraum eingeleiteten Luft deutlich reduziert werden kann.

Bei einer Fahrgastzelle kann es sich um den Innenraum eines Personenkraftwagens handeln, aber auch um den Fahrgastraum eines Zuges oder eines Busses, um einen Fahrgastraum eines Lastkraftwagens, um eine Kabine eines Schiffes, oder prinzipiell um Fahrgasträume/Fahrgastzellen von Personenbeförderungseinrichtungen, also auch den Fahrgastraum von Gondeln oder Seilbahnen.

In einer Ausgestaltung der Erfindung ist das Wärmeträgermedium ein Fluid oder ein Gas. Als Fluid kann beispielsweise Wasser mit einem Frostschutzmittel verwendet werden.

Erfindungsgemäß kann das System zum Temperieren einer Oberfläche innerhalb einer Fahrgastzelle in bestehende Klimaregelkonzepte des Fahrzeugs integriert werden, wobei ohnehin vorgesehene Hardware (etwa Wärmetauscher oder Klimakompressoren) genutzt werden kann.

In einer vorteilhaften Ausgestaltung der Erfindung ist unterhalb der zu temperierenden Oberfläche und zwischen der zu temperierenden Oberfläche und den Kanälen eine wärmeleitfähige, flächige Folie angeordnet.

Damit kann der Abstrahleffekt (Wärme- bzw. Kälteabstrahlung) erheblich verstärkt werden. Zudem wird so gewährleistet, dass die zu temperierende Oberfläche über die gesamte Fläche weitestgehend gleichmäßig erwärmt bzw. abgekühlt wird.

Vorteilhaft ist es hierbei, wenn die wärmeleitfähige, flächige Folie an einer Stelle oder an mehreren Stellen mit den Kanälen thermisch gekoppelt ist.

Dadurch wird erreicht, dass die von den Kanälen abgegebene Wärme bzw. Kälte direkt an die Folie abgegeben wird. "Thermisch gekoppelt" bedeutet in diesem Zusammenhang, dass die Folie an einer Stelle oder an mehreren Stellen mit den Kanälen kontaktiert ist.

In einer Ausgestaltung der Erfindung kann die wärmeleitfähige, flächige Folie eine metallische Folie umfassen.

In dem Heiz-/Kühlkreislauf kann zumindest eine Umwälzpumpe angeordnet sein.

Die Kanäle können zumindest teilweise in einem Schaum oder Schaumstoff eingebettet sein.

Erfindungsgemäß können die Kanäle mehrere voneinander unabhängige Heiz-/Kühlkreisläufe bilden bzw. Bestandteil mehrerer voneinander unabhängige Heiz-/Kühlkreisläufe sein, wobei die Heiz-/Kühlkreisläufe verschiedenen zu temperierenden Oberflächen zugeordnet sein können.

Beispielsweise kann ein Heiz-/Kühlkreislauf für den Dachhimmel des Fahrzeuginnenraums vorgesehen sein. Ein weiterer Heiz-/Kühlkreislauf kann in einer Türverkleidung vorgesehen sein. Ein noch weiterer Heiz-/Kühlkreislauf kann beispielsweise im Boden des Fahrzeuginnenraums integriert sein. Jeder dieser drei Heiz-/Kühlkreisläufe weist erfindungsgemäße Kanäle auf.

Sofern konstruktiv möglich, können alle dem Fahrzeuginnenraum zugewandten Oberflächen entsprechende Kanäle eines oder mehrerer Heiz-/Kühlkreisläufe aufweisen, wobei in einer vorteilhaften Ausgestaltung der Erfindung vorgesehen ist, dass verschiedene zu temperierende Oberflächen mittels des jeweiligen Heiz-/Kühlkreislaufs mit verschiedenen Temperaturen beaufschlagbar sind. Dadurch können beispielsweise die dem Fahrzeugführer zugeordneten Oberflächen und die dem Beifahrer zugeordneten Oberflächen des Fahrzeuginnenraums mit unterschiedlichen Temperaturen beaufschlagt werden.

Das Fahrzeug kann ein Personenkraftwagen, ein Schienenfahrzeug, ein Lastkraftwagen, ein Flugzeug oder ein Schiff sein.

### Bereit gestellt wird des Weiteren

Verfahren zum Herstellen und zum Betrieb eines Systems zum Temperieren zumindest einer Oberfläche innerhalb einer Fahrgastzelle eines Fahrzeuges, insbesondere eines Personenkraftwagens, eines Zuges, eines Busses oder eines Flugzeuges, wobei
- unterhalb oder hinter der Oberfläche der Fahrgastzelle des Fahrzeuges Kanäle angeordnet werden, durch die ein Wärmeträgermedium hindurchgeleitet wird,
- die Kanäle in einen Heiz-/Kühlkreislauf des Fahrzeuges eingebunden werden, sodass die Kanäle Bestandteil des Heiz-/Kühlkreislaufes sind, und
- die Kanäle mit einer Heiz-/Kühleinrichtung gekoppelt werden, wobei die Heiz-/Kühleinrichtung das Wärmeträgermedium erwärmt oder kühlt.

Als Wärmeträgermedium kann ein Gas oder ein Fluid, insbesondere Wasser mit einem Frostschutzmittel, verwendet werden.

Vorteilhaft ist es, wenn zwischen der Heiz-/Kühleinrichtung und den Kanälen eine Umwälzpumpe angeordnet wird, mit der das Wärmeträgermedium den Kanälen zugeführt wird, und wobei über eine oder mehrere Ventileinrichtungen die Kanäle wahlweise mit einer Kühleinrichtung der Heiz-/Kühleinrichtung oder mit einer Heizeinrichtung der Heiz-/Kühleinrichtung gekoppelt werden, sodass entweder ein erwärmtes oder ein gekühltes Wärmeträgermedium den Kanälen zugeführt wird.

Der Innenraum der Fahrgastzelle kann mehrere getrennte zu temperierende Oberflächen aufweisen, wobei jeder dieser getrennten Oberflächen separate Kanäle zugeordnet werden und wobei jedem dieser Kanäle unabhängig voneinander ein Wärmeträgermedium zugeführt wird.

Zwischen den Kanälen und der zu temperierenden Oberfläche kann eine wärmeleitfähige, flächige Folie angeordnet werden.

Vorteilhaft kann es ferner sein, wenn
- die wärmeleitfähige, flächige Folie mit den Kanälen kontaktiert wird, und / oder
- im Zwischenraum zwischen der Folie und den Kanälen ein wärmeleitendes Material, insbesondere eine Wärmeleitpaste eingebracht wird, und / oder
- die Rückseite der Kanäle in einen Schaum oder Schaumstoff eingebettet wird.

Ferner wird durch die Erfindung ein Fahrzeug bereitgestellt, das ein erfindungsgemäßes System zum Temperieren zumindest einer Oberfläche innerhalb einer Fahrgastzelle des Fahrzeugs aufweist.

### Kurzbeschreibung der Figuren

Einzelheiten und Merkmale der Erfindung sowie konkrete Ausgestaltungen der Erfindung ergeben sich aus der nachfolgenden Beschreibung in Verbindung mit der Zeichnung. Es zeigt:
- **Fig. 1**: ein Blockdiagramm eines erfindungsgemäßen Systems;
- **Fig. 2**: eine Anordnung der Kanäle eines erfindungsgemäßen Systems am Beispiel eines Dachhimmels eines Fahrzeuginnenraums;
- **Fig. 3**: einen Querschnitt eines erfindungsgemäßen Systems und die Anordnung des Systems relativ zu der temperierenden Oberfläche; und
- **Fig. 4**: eine alternative Ausgestaltung der Kanäle des erfindungsgemäßen Systems.

### Detaillierte Beschreibung der Erfindung

Erfindungsgemäß ist es vorgesehen, dass Oberflächen im Fahrzeuginnenraum zusätzlich zur üblichen Temperierung mittels Zuluft mittels eines Systems bestehend aus Kanälen temperiert, das heißt, erwärmt oder gekühlt werden können. Dadurch kann die Zuluft und die Strömungsgeschwindigkeit der Zuluft erheblich reduziert werden. Temperierte Oberflächen im Fahrzeuginnenraum werden als wesentlich angenehmer empfunden als Oberflächen, die sich deutlich von der Lufttemperatur im Fahrzeuginnenraum unterscheiden.

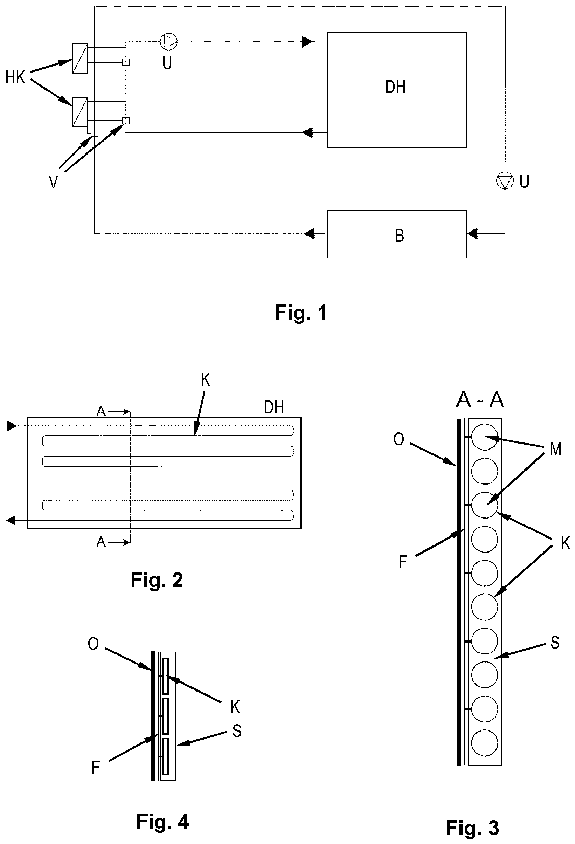

**Fig. 1** zeigt ein Blockschaltbild eines erfindungsgemäßen Systems zum Temperieren einer Oberfläche innerhalb einer Fahrgastzelle eines Fahrzeugs, wobei hier beispielhaft ein Dachhimmel DH und ein Boden B eines Fahrzeuginnenraums als zu temperierende Oberflächen gezeigt sind. In dem Dachhimmel DH und in dem Boden B sind Kanäle angeordnet, durch die ein Wärmeträgermedium M hindurchgeleitet werden kann. Die Kanäle sind Bestandteil eines Heiz-/Kühlkreislaufs, wobei für jede zu temperierende Oberfläche ein eigener Heiz-/Kühlkreislauf vorgesehen sein kann. Als Wärmeträgermedium M kann ein Fluid oder ein Gas verwendet werden. Beispielhaft wird hier als Wärmeträgermedium Wasser mit einem Frostschutzmittel verwendet.

Über Zu- bzw. Ableitungen sind die Kanäle K mit einer Heiz-/Kühleinrichtung HK gekoppelt, wobei in dem Heiz-/Kühlkreislauf jeweils eine Umwälzpumpe U angeordnet sein kann. Mit der Umwälzpumpe U wird das Wärmeträgermedium M den Kanälen K zugeführt. Ferner kann mit der Umwälzpumpe U die Strömungsgeschwindigkeit gesteuert werden, mit der das Wärmeträgermedium den Kanälen zugeführt wird. Mittels Stellventilen V, die als 3-Wege-Ventile ausgestaltet sein können, können die Heiz-/Kühlkreisläufe geschaltet werden, das heißt, gesteuert werden, ob über einen Heiz-/Kühlkreislauf eine zu temperierende Oberfläche erwärmt oder gekühlt wird.

Das Wärmeträgermedium kann beispielsweise über den Wärmetauscher einer Heizeinrichtung des Fahrzeugs erwärmt werden. Ebenso kann das Wärmeträgermedium über den Wärmetauscher eines Klimakompressors gekühlt werden.

In Fig. 1 sind zwei Heiz-/Kühlkreisläufe gezeigt, wobei ein Heiz-/Kühlkreislauf zum Erwärmen bzw. zum Kühlen des Dachhimmels DH und der andere Wärme-/Kühlkreislauf zum Erwärmen bzw. zum Kühlen des Bodens des Fahrzeuginnenraums vorgesehen ist.

Erfindungsgemäß können noch weitere Heiz-/Kühlkreisläufe vorgesehen sein, um weitere Oberflächen in dem Fahrzeuginnenraum zu erwärmen bzw. zu kühlen. Weitere solche Oberflächen können beispielsweise das Fahrzeugcockpit, die Verkleidung der Fahrzeugtüren oder eine Armauflage sein.

Zudem kann eine zu temperierende Oberfläche, etwa der Dachhimmel, über mehrere Heiz-/Kühlkreisläufe verfügen, um an einer Oberfläche unterschiedlich temperierte Zonen zu realisieren. Beispielsweise könnten der dem Fahrzeugführer zugeordnete Abschnitt des Dachhimmels und der dem Beifahrer zugeordnete Abschnitt des Dachhimmels jeweils über einen eigenen Heiz-/Kühlkreislauf verfügen, sodass der Dachhimmel fahrzeugführerseitig und beifahrerseitig unterschiedlich temperiert werden kann.

**Fig. 2** zeigt am Beispiel des in Figur 1 gezeigten Dachhimmels DH eine beispielhafte Ausgestaltung bzw. einen beispielhaften Verlauf der in dem Dachhimmel angeordneten Kanäle K eines erfindungsgemäßen Systems zum Temperieren einer Oberfläche.

Die Kanäle K verlaufen hier meanderförmig unterhalb der Oberfläche des Dachhimmels DH. Je nach konkreter Anforderung kann der Kanal bzw. können die Kanäle auch einen anderen Verlauf, etwa einen spiralförmigen Verlauf unterhalb der Oberfläche aufweisen.

**Fig. 3** zeigt einen Querschnitt einer zu temperierenden Oberfläche O und einem dahinter bzw. darunter angeordneten System zum Temperieren der Oberfläche in einer Schnittansicht entlang der Schnittachse A-A (siehe Fig. 2).

Bei der Oberfläche O handelt es sich in diesem Beispiel um einen Dachhimmelbezug eines Fahrzeuginnenraums. Es kann sich aber auch um eine andere Innenraumverkleidung eines Fahrzeugs, etwa um eine Innenverkleidung einer Fahrzeugtür oder um die Innenverkleidung eines Fahrzeugbodens handeln.

Hinter dieser Verkleidung bzw. hinter der Oberfläche O sind die Kanäle K angeordnet. Der Abstand zwischen den Kanälen K und der Oberfläche O sollte möglichst gering gewählt werden, um eine möglichst effiziente Erwärmung bzw. Abkühlung der Verkleidung bzw. der Oberfläche O zu erreichen. Der Abstand kann typischerweise zwischen einem Millimeter und fünf Millimetern betragen. Bei konstruktiv komplexen Oberflächen kann dieser Abstand aber auch größer sein, insbesondere auch mehrere Zentimeter betragen.

Der Durchmesser des Kanals K bzw. der Kanäle beträgt typischerweise zwischen einem Millimeter und mehreren Millimetern, etwa fünf Millimeter. Durchmesser bis zu einem Zentimeter oder mehr sind jedoch möglich. Das Material der Kanäle K wird so gewählt, dass eine effiziente Wärmeenergieübertragung zur Oberfläche O hin erfolgen kann.

Bei der hier in Fig. 3 gezeigten Ausgestaltung sind die Kanäle bzw. der Kanal K in einem Schaum bzw. Schaumstoff S eingebettet. Bei der in Fig. 3 gezeigten Ausgestaltung sind die Kanäle bzw. der Kanal K vollständig von dem Schaum bzw. von dem Schaumstoff S umgeben. Vorteilhaft ist es allerdings, wenn die Kanäle bzw. der Kanal K zur Oberfläche O hin aus dem Schaum bzw. Schaumstoff S herausragen, das heißt, dass an der der Oberfläche O zugewandten Seite der Kanäle kein Schaum bzw. Schaumstoff S angeordnet ist. Der an der von der Oberfläche O abgewandten Seite der Kanäle K vorgesehene Schaum bzw. Schaumstoff S verhindert ein rückseitiges Erwärmen bzw. Abkühlen, wodurch ein unnötiger Energieverbrauch weitestgehend vermieden wird.

Die hier gezeigten Kanäle K weisen einen kreisförmigen Querschnitt auf. In einer alternativen Ausgestaltung der Erfindung können die Kanäle K auch einen rechteckigen Querschnitt aufweisen, wie mit Bezug auf **Fig. 4** gezeigt. Bei einem rechteckigen Querschnitt kann der Querschnitt eine Breite von einem bis einigen Millimetern und eine Länge von einigen Millimetern bis einigen Zentimetern aufweisen. Mit einem rechteckigen Querschnitt der Kanäle K kann die Oberfläche O deutlich besser gekühlt bzw. erwärmt werden, da dadurch bei einem entsprechenden Verlauf der Kanäle eine im Wesentlichen flächige Oberfläche bereitgestellt werden kann.

In einer Ausgestaltung der Erfindung kann zwischen der Oberfläche O und den Kanälen K eine wärmeleitfähige, flächige Folie F angeordnet werden. Vorzugsweise handelt es sich hierbei um eine metallische Folie. Mit dieser Folie kann der Abstrahleffekt der Kanäle K zur Oberfläche O hin deutlich verstärkt werden. Insbesondere kann die Folie F an einer oder mehreren Stellen mit den Kanälen K kontaktiert sein, sodass eine noch bessere Übertragung der Wärme bzw. der Kälte auf die Folie F ermöglicht wird.

In einer Ausgestaltung der Erfindung kann in den Zwischenräumen zwischen der Folie F und den Kanälen K eine Wärmeleitpaste eingebracht werden, sodass der Energieverlust auf ein Minimum reduziert wird bzw. der Energieverbrauch für das Erwärmen bzw. Abkühlen des Fahrzeuginnenraums reduziert wird. Bei Vorsehen einer Wärmeleitpaste in den Zwischenräumen zwischen der Folie F oder alternativ zwischen der Oberfläche O und den Kanälen K sind die Kanäle K an der der Oberfläche O zugewandten Seite in die Wärmeleitpaste eingebettet und an der der Oberfläche O abgewandten Seite in den Schaum bzw. Schaumstoff S eingebettet.

Im Folgenden wird ein erfindungsgemäßes Verfahren zum Betrieb eines Systems zum Temperieren zumindest einer Oberfläche innerhalb einer Fahrgastzelle eines Fahrzeugs erläutert.

Unterhalb oder hinter einer Oberfläche O einer Fahrgastzelle eines Fahrzeuges, beispielsweise unterhalb bzw. hinter dem Dachhimmel eines Personenkraftwagens, werden Kanäle angeordnet, durch die ein Wärmeträgermedium hindurchleitbar ist, wobei die Kanäle in einen Heiz-/Kühlkreislauf des Fahrzeuges integriert bzw. eingebunden sind, sodass die Kanäle Bestandteil des Heiz-/Kühlkreislaufes sind und wobei die Kanäle mit einer Heiz-/Kühleinrichtung gekoppelt werden, und wobei die Heiz-/Kühleinrichtung das Wärmeträgermedium erwärmt oder kühlt.

Bei dem Heiz-/Kühlkreislauf handelt es sich vorzugsweise um ein geschlossenes System. Als Wärmeträgermedium wird ein Gas oder ein Fluid verwendet. Das Fluid kann beispielsweise Wasser mit einem Frostschutzmittel sein.

Im Heiz-/Kühlkreislauf, insbesondere zwischen der Heiz-/Kühleinrichtung und den Kanälen wird eine Umwälzpumpe angeordnet, mit der das Wärmeträgermedium den Kanälen zugeführt wird.

Über eine oder mehrere Ventileinrichtungen, etwa über 3-Wege-Ventile, werden die Kanäle wahlweise mit einer Kühleinrichtung der Heiz-/Kühleinrichtung oder mit einer Heizeinrichtung der Heiz-/Kühleinrichtung gekoppelt, sodass entweder ein erwärmtes oder ein gekühltes Wärmeträgermedium den Kanälen zugeführt werden kann.

In einer Ausgestaltung der Erfindung ist es auch möglich, gleichzeitig ein erwärmtes und ein gekühltes Wärmeträgermedium den Kanälen zuzuführen, sodass ein Gemisch aus gekühltem und erwärmtem Wärmeträgermedium auf eine vorbestimmte Temperatur gebracht bzw. gehalten werden kann. Die entsprechenden Ventileinrichtungen werden hierzu entsprechend geöffnet bzw. geschlossen. Für das Überwachen der einzustellenden Solltemperatur des Wärmeträgermediums können in den Kanälen oder in den Zuflüssen entsprechend ausgestaltete Temperatursensoren vorgesehen werden, die mit einer Steuereinrichtung gekoppelt werden. Die Steuereinrichtung kann dann anhand der erfassten Messwerte und in Abhängigkeit von der Solltemperatur die Ventile entsprechend steuern.

Solche Temperatursensoren können auch im Innenraum der Fahrgastzelle vorgesehen werden, wobei es vorteilhaft ist, bei der Steuerung der Ventile auch die Messwerte dieser Sensoren zu berücksichtigen. Mit diesen Sensoren kann die Innenraumtemperatur der Fahrgastzelle erfasst werden.

In einer Ausgestaltung der Erfindung kann der Innenraum der Fahrgastzelle mehrere getrennte zu temperierende Oberflächen aufweisen. Jeder dieser getrennten Oberflächen können separate Kanäle zugeordnet werden. Jedem dieser Kanäle kann unabhängig voneinander ein Wärmeträgermedium zugeführt werden. Das diesen separaten Kanälen zugeführte Wärmeträgermedium kann jeweils auf verschiedene Temperaturen eingestellt werden. Dadurch kann beispielsweise der Dachhimmel im Bereich des Fahrzeugführers gekühlt werden, sodass dieser einen "kühlen Kopf bewahrt", während der Dachhimmel im Bereich des Beifahrers erwärmt wird.

Wie mit Bezug auf Fig. 1 bis Fig. 4 erläutert, können unterschiedlichste Oberflächen einer Fahrgastzelle erfindungsgemäß erwärmt oder gekühlt werden, etwa die Innenverkleidung einer Fahrzeugtür oder das Armaturenbrett.

Um die Energieeffizienz zu erhöhen, wird zwischen den Kanälen und der zu temperierenden Oberfläche eine wärmeleitfähige, flächige Folie angeordnet. Damit wird einerseits die Übertragung der Wärmeenergie (Wärme und/oder Kälte) an die zu temperierende Oberfläche verbessert. Andererseits wird erreicht, dass die zu temperierende Oberfläche gleichmäßig erwärmt / gekühlt wird, d.h. dass die zu temperierende Oberfläche über die gesamte Fläche eine weitgeheng gleiche Temperatur aufweist.

Um diese Übertragung der Wärmeenergie noch weiter zu verbessern, wird die wärmeleitfähige, flächige Folie mit den Kanälen kontaktiert. Im Zwischenraum zwischen der Folie und den Kanälen kann zur noch besseren Übertragung der Wärmeenergie eine Wärmeleitpaste (oder ähnliche wärmeleitende Materialien) eingebracht werden.

Die Rückseite der Kanäle wird gemäß einer Ausgestaltung der Erfindung in einen Schaum oder Schaumstoff eingebettet, wobei der Schaum/Schaumstoff möglichst gute Wärmeisoliereigenschaften aufweisen sollte. Es können auch andere wärmeisolierende Materialien vorgesehen werden. Damit wird erreicht, dass, etwa am Beispiel des Dachhimmels, nicht in unnötiger Weise die Dachverkleidung des Fahrzeuges temperiert wird. Die Energieeffizienz kann so nochmal deutlich erhöht werden.

### Bezugszeichen:

- B: Boden einer Fahrgastzelle
- DH: Dachhimmel eines Fahrzeuges
- F: Folie, z.B. metallische Folie
- HK: Heiz-/Kühleinrichtung
- K: Kanäle
- M: Wärmeträgermedium (Gas oder Fluid)
- O: Oberfläche innerhalb einer Fahrgastzelle eines Fahrzeuges
- S: Schaum oder Schaumstoff
- U: Umwälzpumpe
- V: Ventile, z.B. 3-Wege-Ventil

## Patentansprüche

1. System zum Temperieren zumindest einer Oberfläche (O) innerhalb einer Fahrgastzelle eines Fahrzeuges, insbesondere eines Personenkraftwagens, eines Zuges, eines Busses oder eines Flugzeuges, wobei
- unterhalb der zu temperierenden Oberfläche (O) Kanäle (K) angeordnet sind, durch die ein Wärmeträgermedium (M) hindurchleitbar ist,
- die Kanäle (K) Bestandteil eines Heiz-/Kühlkreislaufes sind, und
- die Kanäle (K) mit einer Heiz-/Kühleinrichtung (HK) gekoppelt sind, wobei die Heiz-/Kühleinrichtung (HK) angepasst ist, das Wärmeträgermedium (M) zu erwärmen und/oder zu kühlen.

2. System nach dem vorhergehenden Anspruch, wobei das Wärmeträgermedium (M) ein Fluid oder ein Gas ist.

3. System nach einem der vorhergehenden Ansprüche, wobei unterhalb der zu temperierenden Oberfläche (O) und zwischen der zu temperierenden Oberfläche (O) und den Kanälen (K) eine wärmeleitfähige, flächige Folie (F) angeordnet ist, wobei die wärmeleitfähige, flächige Folie (F) vorzugsweise an einer Stelle oder an mehreren Stellen mit den Kanälen (K) thermisch gekoppelt ist.

4. System nach dem vorhergehenden Anspruch, wobei die wärmeleitfähige, flächige Folie (F) eine metallische Folie umfasst.

5. System nach einem der vorhergehenden Ansprüche, wobei in dem Heiz-/Kühlkreislauf zumindest eine Umwälzpumpe (U) angeordnet ist.

6. System nach einem der vorhergehenden Ansprüche, wobei die Kanäle (K) zumindest teilweise in einem Schaum oder Schaumstoff (S) eingebettet sind.

7. System nach einem der vorhergehenden Ansprüche, wobei die Kanäle (K) mehrere voneinander unabhängige Heiz-/Kühlkreisläufe bilden, wobei die Heiz-/Kühlkreisläufe verschiedenen zu temperierenden Oberflächen zugeordnet sind.

8. System nach dem vorhergehenden Anspruch, wobei die verschiedenen zu temperierenden Oberflächen mittels des jeweiligen Heiz-/Kühlkreislaufes mit verschiedenen Temperaturen beaufschlagbar sind.

9. Fahrzeug, insbesondere ein Personenkraftwagen, ein Zug, ein Bus oder ein Flugzeug, mit einem System zum Temperieren zumindest einer Oberfläche (O) innerhalb einer Fahrgastzelle des Fahrzeuges, wobei das System nach einem der vorhergehenden Ansprüche ausgebildet ist.

10. Verfahren zum Herstellen und zum Betrieb eines Systems zum Temperieren zumindest einer Oberfläche (O) innerhalb einer Fahrgastzelle eines Fahrzeuges, insbesondere eines Personenkraftwagens, eines Zuges, eines Busses oder eines Flugzeuges, wobei
- unterhalb oder hinter der Oberfläche O der Fahrgastzelle des Fahrzeuges Kanäle angeordnet werden, durch die ein Wärmeträgermedium hindurchgeleitet wird,
- die Kanäle in einen Heiz-/Kühlkreislauf des Fahrzeuges eingebunden werden, sodass die Kanäle Bestandteil des Heiz-/Kühlkreislaufes sind, und
- die Kanäle mit einer Heiz-/Kühleinrichtung gekoppelt werden, wobei die Heiz-/Kühleinrichtung das Wärmeträgermedium erwärmt oder kühlt.

11. Verfahren nach dem vorhergehenden Anspruch, wobei als Wärmeträgermedium ein Gas oder ein Fluid, insbesondere Wasser mit einem Frostschutzmittel, verwendet wird.

12. Verfahren nach einem der beiden vorhergehenden Ansprüche, wobei zwischen der Heiz-/Kühleinrichtung und den Kanälen eine Umwälzpumpe angeordnet wird, mit der das Wärmeträgermedium den Kanälen zugeführt wird, und wobei über eine oder mehrere Ventileinrichtungen die Kanäle wahlweise mit einer Kühleinrichtung der Heiz-/Kühleinrichtung oder mit einer Heizeinrichtung der Heiz-/Kühleinrichtung gekoppelt werden, sodass entweder ein erwärmtes oder ein gekühltes Wärmeträgermedium den Kanälen zugeführt wird.

13. Verfahren nach einem der drei vorhergehenden Ansprüche, wobei der Innenraum der Fahrgastzelle mehrere getrennte zu temperierende Oberflächen aufweist, wobei jeder dieser getrennten Oberflächen separate Kanäle zugeordnet werden und wobei jedem dieser Kanäle unabhängig voneinander ein Wärmeträgermedium zugeführt wird.

14. Verfahren nach einem der vier vorhergehenden Ansprüche, wobei zwischen den Kanälen und der zu temperierenden Oberfläche eine wärmeleitfähige, flächige Folie angeordnet wird.

15. Verfahren nach dem vorhergehenden Anspruch, wobei die wärmeleitfähige, flächige Folie mit den Kanälen kontaktiert wird und / oder wobei im Zwischenraum zwischen der Folie und den Kanälen ein wärmeleitendes Material, insbesondere eine Wärmeleitpaste eingebracht wird, und / oder wobei die Rückseite der Kanäle in einen Schaum oder Schaumstoff eingebettet wird.
